# EUROPEAN PATENT SPECIFICATION

(11) **EP 0 378 216 B1**
(45) Date of publication and mention of the grant of the patent: **30.11.1994**
(21) Application number: 90100532.2
(22) Date of filing: 11.01.1990
(51) Int. Cl.: G11B 11/10

(54) **Photomagnetic eraser**
Photomagnetische Löschvorrichtung
Dispositif d'effacement photomagnétique

(30) Priority: 13.01.1989 JP 6850/89; 28.04.1989 JP 111129/89
(43) Date of publication of application: 18.07.1990
(73) Proprietor: MITSUBISHI DENKI KABUSHIKI KAISHA, Chiyoda-ku Tokyo (JP)
(72) Inventor: Shindo, Koji c/o MITSUBISHI DENKI K.K., Amagasaki-shi, Hyogo (JP); Fujii, Yoshio c/o MITSUBISHI DENKI K.K., Amagasaki-shi, Hyogo (JP)
(74) Representative: Kinne, Reinhard, Dipl.-Ing.

(56) References cited:
- DE-A- 3 630 765
- PATENT ABSTRACTS OF JAPAN, unexamined applications, P field, vol. 13, no. 146,April 11, 1989 THE PATENT OFFICE JAPANESE GOVERNMENT page 73 P 854
- PATENT ABSTRACTS OF JAPAN, unexamined applications, P field, vol. 5, no. 92,June 16, 1981 THE PATENT OFFICE JAPANESE GOVERNMENT page 99 P 66
- PATENT ABSTRACTS OF JAPAN, unexamined applications, P field, vol. 10, no. 382,December 20, 1986 THE PATENT OFFICE JAPANESE GOVERNMENT page 63 P 529

## Description

### BACKGROUND OF THE INVENTION

### 1. Field of the Invention:

This invention relates to a photomagnetic eraser for erasing or initializing information which is recorded on a photomagnetic recording medium by utilizing light beam and magnetic field.

### 2. Description of the Related Art:

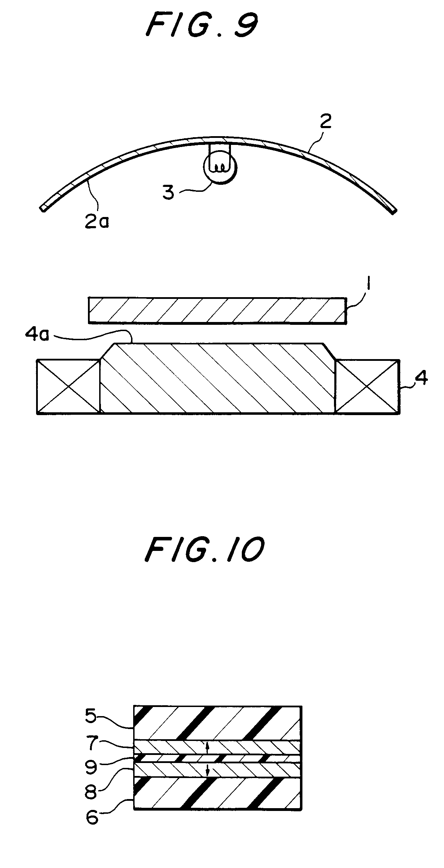

FIG. 9 of the accompanying drawings shows a photomagnetic eraser according to the preamble of claim 1 disclosed in our co-assigned Japanese Patent Application JP-A- 63 308 755. In FIG. 9, an electromagnet 4 is located at a position spaced a suitable distance from a parabolic surface 2a of a reflector 2 so that a magnetic pole 4a of the electromagnet 4 confronts the reflector 2. A single light source 3 is disposed inwardly of the parabolic surface 2a of the reflector 2. In this prior arrangement, a photomagnetic recording medium 1 is disposed close to the magnetic pole 4a of the electromagnet 4. The photomagnetic recording medium 1 is a medium for recording and reproducing information by utilizing light beam and magnetic field, and includes a magnetic layer such as of a TbFeCo film having the axis of easy magnetization in a direction perpendicular to the film surface. When light emitted from the light source 3 strikes on the photomagnetic recording medium 1, this recording medium is heated, and at the same time, a perpendicular magnetic field of over 3.978 · 10⁵ A/m (5,000 Oe) is given over the entire surface of the photomagnetic recording medium 1 due to the electromagnet 4.

By this prior photomagnetic eraser, information recorded on the photomagnetic recording medium is erased in the following manner.

Firstly, the electromagnet 4 is energized so as to apply a perpendicular magnetic field of over 3.978 · 10⁵ A/m (5,000 Oe) over the entire surface of the photomagnetic recording medium 1. Then, light emitted from the light source 3 is projected on the entire surface of the photomagnetic recording medium 1. This energization and projection causes the temperature of the recording film surface of the photomagnetic recording medium 1 to rise to over 180°C. With this temperature rise, the coercive force of the photomagnetic recording medium 1 drops to less than 3.978 · 10⁴ A/m (500 Oe), and the directions of magnetization of the information recording surface are all caused to be uniform in the direction of magnetic field given from the electromagnet 4. As a result, the information recorded on the photomagnetic recording medium 1 in a pattern of magnetization is erased.

A common problem with this prior arrangement is that because heat due to light emitted from the single light source 3 is not enough to increase the temperature of the photomagnetic recording medium 1 uniformly over its entire surface.

In the case where the photomagnetic recording medium is in a double-face form shown in FIG. 10, the prior eraser is encountered with the following problem. As shown in FIG. 10, the double-face photomagnetic recording medium is composed of two transparent substrates 5, 6 of a resin such as polymetylmethacrylate (PMMA), polycarbonate (PC), etc., a pair of magnetic layers 7, 8 formed the respective substrates 7, 8 so as to confront each other and attached to each other via an adhesive layer 9. When initializing this double-face photomagnetic recording medium or erasing information recorded thereon, magnetizations of the respective surfaces of the confronting magnetic layers 7, 8 must be in mutually opposite directions, as indicated by the arrows, to make codes of respective signal outputs during the reproduction of information equal. However, according to the convention method, upon application of magnetic fields, magnetizations of the respective layer surfaces would be inconveniently in one and the same direction. Therefore the conventional method cannot be useful for erasing information recorded on a double-face photomagnetic recording medium.

### SUMMARY OF THE INVENTION

It is therefore an object of this invention to provide a photomagnetic eraser which is capable of erasing information on the entire recording surface of a recording medium instantly and reliably without causing irregular erasing.

Another object of this invention is to provided a photomagnetic eraser which is capable of initializing a photomagnetic recording medium, either single-faced or double-faced, and of erasing information on such a photomagnetic recording medium.

The invention is characterized by the features of claim 1.

With this arrangement, the photomagnetic recording medium is heated by light emitted from the light sources. And a magnetic field is applied to the photomagnetic recording medium along the axis of easy magnetization by the magnetic field generating means. By this heat and magnetic field, information recorded on the magnetic layer of the photomagnetic recording medium is erased. Further, because of a plurality of light sources, it is possible to prevent non-uniform erasing that results from uneven light and hence uneven heat.

According to a further aspect of this invention, there is provided a photomagnetic eraser for erasing information recorded on a double-face photomagnetic recording medium having a pair of magnetic layers one on each side, each of the magnetic layers having an axis of easy magnetization perpendicular to its surface, said eraser comprising:
(a) a pair of reflectors each having a concave surface confronting a respective one of opposite surfaces of the double-face photomagnetic recording medium;
(b) a pair of light sources each disposed inwardly of said concave surface of each of said reflectors for applying light over the respective surface of the photomagnetic recording medium directly and/or via the respective reflector to heat the corresponding magnetic layer; and
(c) a pair of magnetic field generating means each for generating a magnetic field to be supplied to the respective photomagnetic recording medium along the corresponding axis of easy magnetization.

With this arrangement, light emitted from a plurality of light sources is applied to each surface of the double-face photomagnetic recording medium. Therefore initializing of the double-face photomagnetic recording medium and also erasing of information recorded thereon can be achieved.

According to another aspect of this invention, there is provided a photomagnetic eraser for erasing information recorded on a double-face photomagnetic recording medium having a pair of magnetic layers one on each side, each of the magnetic layers having an axis of easy magnetization perpendicular to its surface, said eraser comprising:
(a) a pair of reflectors each having a concave surface confronting a respective one of opposite surfaces of the double-face photomagnetic recording medium;
(b) a plurality of light sources disposed inwardly of said concave surface of each of said reflectors for applying light over the respective surface of the photomagnetic recording medium directly and/or via the respective reflector to heat the corresponding magnetic layer; and
(c) a pair of magnetic field generating means each for generating a magnetic field to be supplied to the respective photomagnetic recording medium along the corresponding axis of easy magnetization.

With this arrangement, the same results as in the foregoing arrangements can be obtained.

In one further arrangement, either magnetic layer can be selectively erased by applying light and magnetic field with a selected set of the light source and magnetic field generating means which set confronts one surface of the double-face photomagnetic recording medium.

The invididual light source is a flash light source capable of emitting a brief dazzling light, for example. The light sources may be arranged in the following manner:
a) The light sources are arranged along a circule within the concave surface of the reflector.
b) The individual light sources are spaced different distances from the concave surface of the reflector.

The magnetic field generating means may be a electromagnet, in which case it is possible to apply a magnetic field in synchronism with the light emitting timing of the light source.

Further, since the photomagnetic eraser is equipped with an auxiliary heating means for heating the photomagnetic recording medium, it is possible to reduce the intensity of light to be emitted from the light source, thus minimizing thermal impact that might be to be exerted on the photomagnetic recording medium.

The above and other advantages, features and additional objects of this invention will be manifest to those versed in the art upon making reference to the following detailed description and the accompanying drawings in which several structural embodiments incorporating the principles of this invention are shown by way of illustrative example.

### BRIEF DESCRIPTION OF THE DRAWINGS

FIG. 1 is a schematic cross-sectional view of a photomagnetic eraser according to a first embodiment of this invention;
FIG. 2 is a plan view showing a set of light sources arranged in a reflector according to the first embodiment;
FIG. 3 is a schematic cross-sectional view of a photomagnetic eraser according to a second embodiment;
FIG. 4 is a plan view showing a set of light sources arranged in a reflector according to the second embodiment;
FIG. 5 is a schematic view showing a third embodiment;
FIG. 6 is a schematic view showing a fourth embodiment;
FIG. 7 is a view similar to FIG. 5, showing a fifth embodiment;
FIG. 8 is a characteristic curve graph showing a coercive force-temperature characteristic of a photomagnetic recording medium;
FIG. 9 is a schematic cross-sectional view of a typical conventional photomagnetic eraser; and
FIG. 10 is a fragmentary cross-sectional view of a double-face photomagnetic recording medium.

### DETAILED DESCRIPTION

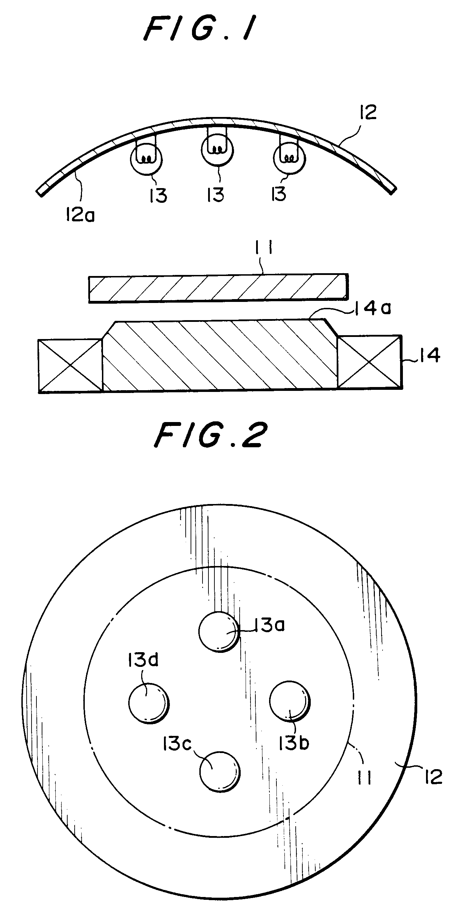

FIGS. 1 and 2 show a photomagnetic eraser according to a first embodiment of this invention.

In this photomagnetic eraser, a flat cylindrical electromagnet 14 is disposed at a position spaced a suitable distance from a parabolic surface 12a of a circular bowl-shaped reflector 12 in such a manner that a magnetic pole 14a of the electromagnet 14 confronts the central portion of the reflector 12. A plurality of (four as shown in FIG. 1) flash light sources 13a, 13b, 13c, 13d are disposed centrally in the parabolic surface 12a of the reflector 12 for intermittently emitting a brief dazzling lights. These light sources 13a, 13b, 13c, 13d are arranged at equal distances along an imaginary circle concentric with the peripheral edge of the reflector 12. The diameter of the reflector 12 is larger than the diameter of a photomagnetic recording medium 11. The photomagnetic recording medium 11 is disposed at a position spaced a suitable distance from the magnetic pole 14a of the electromagnet 14 so as to be parallel to the surface of the magnetic pole 14a. The light sources 13a, 13b, 13c, 13d are disposed on one and the same plane. Each of the light sources 13a, 13b, 13c, 13d emits a brief dazzling light to give to the photomagnetic recording medium 11 heat energy due to the light emission. This heat energy causes the temperature of the photomagnetic recording medium 11 to rise to over about 180°C virtually uniformly throughout its entire surface. Further, the electromagnet 14 gives a perpendicular magnetic field of over 3.978 · 10⁵ A/m (5,000 Oe) over the entire surface of the photomagnetic recording medium 11.

By this photomagnetic eraser, information recorded on the photomagnetic recording medium 11 is erased in the following manner.

Firstly, the photomagnetic recording medium 11 from which recorded information is to be erased is placed close to the electromagnet 14 in parallel relation to the surface of the magnetic pole 14a. Then, the electromagnet 14 is energized to give a perpendicular magnetic field of over 3.978 · 10⁵ A/m (5,000 Oe) over the entire surface of the photomagnetic recording medium 11.

Subsequently, the light sources 13a, 13b, 13c, 13d arranged on the interior side of the reflector 12 are flashed concurrently and instantaneously to increase the temperature of the information-recorded surface of the photomagnetic recording medium 11 uniformly to over 180°C by the heat energy due to this flashing. Alternatively, the flashing may be repeated according to need. With this temperature rise, the coercive force of the photomagnetic recording medium 11 is lowered to less than 3.978 · 10⁴ A/m (500 Oe), and the directions of magnetization of the information recording surface all are made conform to the direction of magnetic field given from the electromagnet 14, namely, one direction. As a result, every information recorded on the photomagnetic recording medium 11 has been erased at once.

For preventing the temperature rise of the photomagnetic recording medium 11 over than necessary, the emitting period of time of the light sources 13a, 13b, 13c, 13d is preferably as short as possible. For this purpose, it is desirable to use flash lamps capable of radiating large heat energy in a moment. Alternatively, the electromagnet 14 may be operable to produce a magnetic field only while the light sources 13a, 13b, 13c, 13d are emitting light.

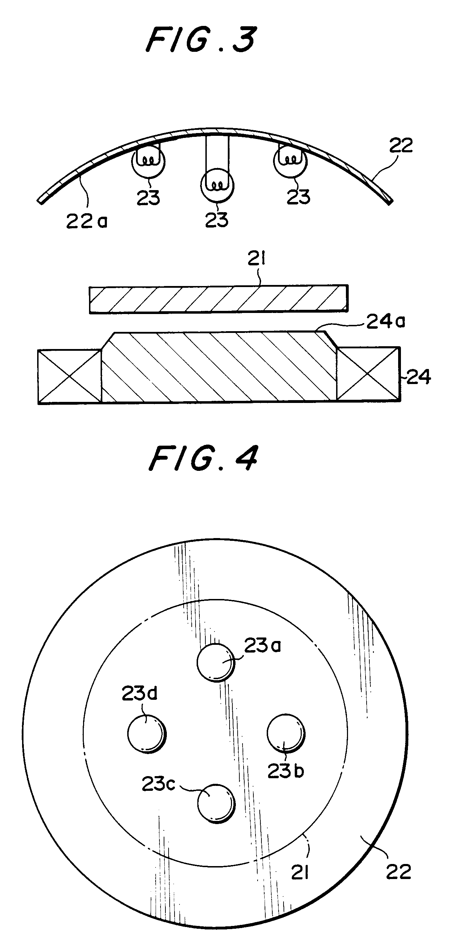

FIGS. 3 and 4 show a photomagnetic eraser of a second embodiment. In this photomagnetic eraser, a plurality of (four shown in FIG. 4) light sources 23a, 23b, 23c, 23d are disposed on the interior side of a reflector 22 having a parabolic surface 22a. These light sources 23a, 23b, 23c, 23d are arranged at equal distances along an imaginary circle concentric with the peripheral edge of the reflector 22. Of these light sources 23a, 23b, 23c, 23d, a pair of light sources 23a, 23c opposed diametrically of the reflector 22 are disposed in a common plane, and another pair of diametically opposed light sources 23b, 23d are disposed in a common plane different in level from the first-named plane. Namely, one pair of light sources 23a, 23c are spaced a relatively long distance from a photomagnetic recording medium 21, and the other pair of light sources 23b, 23d are spaced a relatively short distance from the same photomagnetic recording medium 21. The remaining construction of this photomagnetic eraser is identical with that of the first embodiment (FIGS. 1 and 2), and its description is omitted here for clarity.

In the second embodiment, information recorded on the photomagnetic recording medium 21 can be erased in the same manner as in the first embodiment. Additionally, with the arrangement of FIGS. 3 and 4, the intensities of light from the individual light sources 23a, 23b, 23c, 23d are made uniform as the light emitted from the light sources 23a, 23b, 23c, 23d are reflected by the reflector 22. As a result, the temperature of heating the photomagnetic recording medium 21 are uniformed so that the temperature of the photomagnetic recording medium 21 can be made stable throughout its entire surface, thus minimizing the uneven erasing of the recorded information. Further, it is possible to prevent the photomagnetic recording medium 21 from curling due to heat.

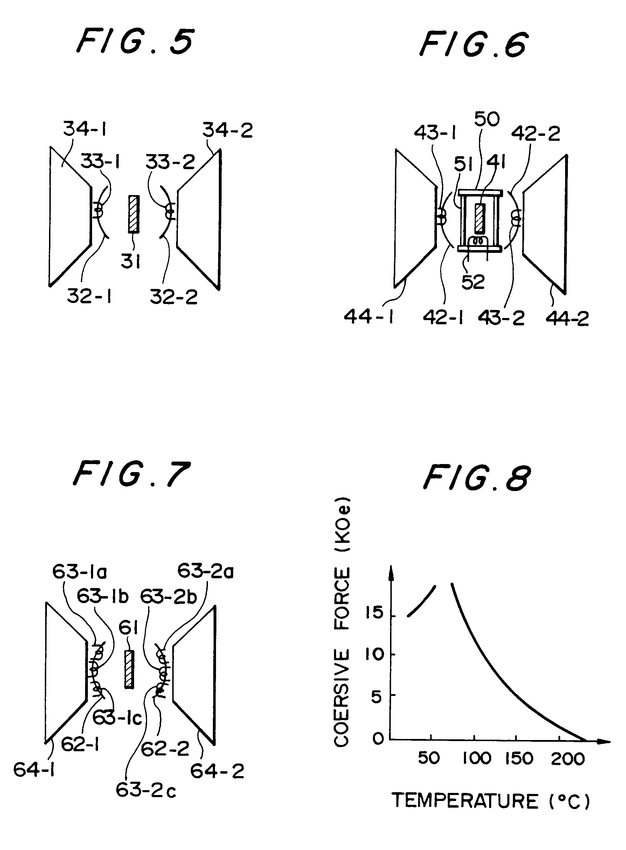

FIG. 5 shows a third embodiment, in which a flash light source 33 and an electromagnet 34 are located on either side of a photomagnetic recording medium 31. This photomagnetic recording medium 31 is a double-faced form as shown in FIG. 10. FIG. 8 is a characteristic curve graph showing the coercive force of the magnetic layer of this double-face photomagnetic recording medium 31 with respect to temperature.

In operation, firstly two electromagnets 34-1, 34-2 are energized on current to produce a magnetic field of about 3 kOe between the two electromagnets 34-1, 34-2. Then a flash light source 33-1 disposed on a front side of the double-face photomagnetic recording medium 31 is rendered operative to apply a flash light of a very short time (several msec to tens msec) over the front surface of the double-face photomagnetic recording medium 31. The front magnetic layer of the double-face photomagnetic recording medium 31 is thereby increased in temperature to about 200°C so that its coercive force is reduced to 1.591 · 10⁵ A/m (2 kOe). As a result, the directions of magnetization of the front magnetic layer have been conformed in the direction of the exterior magnetic field of 2.387 · 10⁵ A/m (3 kOe); photomagnetic erasing has thus been conducted. During that time, since the other magnetic layer on the rear side of the double-face photomagnetic recording medium 31 is spaced from the front magnetic layer by an adhesive layer, the temperature of the rear magnetic layer does not rise to a temperature enough for photomagnetic erasing.

For conducting photomagnetic erasing over the rear magnetic lay of the double-face photomagnetic recording medium 31, the directions of current flow through the electromagnets 34-1, 34-2 are reversed to cause these electromagnetets to produce a magnetic field of - 3 kOe between therebetween. Then the flash light source 33-1 on the rear side of the photomagnetic recording medium 31 is rendered operative to apply a flash light of a very short time over the rear surface of the double-face photomagnetic recording medium 31. The rear magnetic layer of the double-face photomagnetic recording medium 31 is increased in temperature to about 200°C so that its coersive force is minimized to 1.591 · 10⁵ A/m (2 kOe). As a result, the directions of magnetization of the rear magnetic layer have been conformed in the direction of exterior magnetic field of 3 kOe.

In the resulting double-face photomagnetic recording medium 31, the directions of magnetization of the front and rear magnetic layers are made mutually opposite so that codes of the respective reproduction signals at both sides become identical. Further, since generally, a transparent substrate is used for each substrate, light energy due to the application of flash light is hardly absorbed by the substrates. Still further, since the period of application of light is very short, the amount of energy absorbed by the magnetic layers is very small so as not to deform the substrates.

In the third embodiment, photomagnetic erasing of the double-face photomagnetic recording medium 31 is discussed. According to this invention, as a matter of fact, the same photomagnetic erasing operation for the rear magnetic layer of the double-face photomagnetic recording medium 31 may be conducted to erase information on a single-face photomagnetic recording medium.

According to a fourth embodiment of FIG. 6, a photomagnetic eraser is equipped with an auxiliary heating means. The auxiliary heating means is composed of a housing 50, a glass window 51, and a heater 52. For conducting photomagnetic erasing, firstly the heater 52 is energized in advance to increase the temperature of the interior of the housing 50 to a temperature less than the softening point of the substrate of a photomagnetic recording medium 41. Then two electromagnets 44-1, 44-2 are energized on current to produce a magnetic field of about 2.387 · 10⁵ A/m (3 kOe) therebetween.

Subsequently, two flash light sources 43-1, 43-2 are rendered operative selectively one at a time to apply a very brief dazzling light over the photomagnetic recording medium 41. The magnetic layer of the photomagnetic recording medium 41 is increased in temperature to about 200°C so that its coercive force is reduced to 1.591 · 10⁵ A/m (2 kOe). As a result, the directions of magnetization of the magnetic layer are conformed in the direction of exterior magnetic field of 2.387 · 10⁵ A/m (3 kOe) to complete photomagnetic erasing. In the case of a double-face photomagnetic recording medium, like the third embodiment, the direction of applying a magnetic field is reversed, and the opposite-side flash light source is operated.

With this arrangement, since the magnetic layer of the photomagnetic recording medium is preheated, it is possible to complete photomagnetic erasing with a shorter flash light or with a reduced intensity of flash light. As a result, thermal impact exerted on the photomagnetic recording medium is reduced. Therefore this embodiment is particularly useful when applied to a photomagnetic recording medium that is feeble against thermal impact.

FIG. 7 shows a fifth embodiment, in which a plurality of (three shown in FIG. 7) light sources 63-1a, 63-1b, 63-1c; 63-2a, 63-2b, 63-2c are disposed each of two reflector 62-1, 62-2. With this embodiment, the same results as the third embodiment can be obtained. Also it is possible to minimize uneven erasing in particular.

In a photomagnetic eraser, information recorded on a magnetic layer of a photomagnetic recording me dium is erased or initialized by applying light over the photomagnetic recording medium from a light source in a reflector with heating and also by supplying a magnetic field to the photomagnetic recording medium along its axis of easy magnetization. In one form, a plurality of light sources may be disposed in the concave surface of a single reflector. Alternatively, the photomagnetic recording medium may be double-faced, and the light source and reflector may be disposed on each side of the double-face recording medium.

## Claims

1. A photomagnetic eraser for erasing information recorded on a magnetic layer of a photomagnetic recording medium (11; 21; 31; 41; 61), said magnetic layer having an axis of easy magnetization perpendicular to its surface, said eraser comprising:
(a) reflector means (12; 22; 32-1, 32-2; 42-1, 42-2; 62-1, 62-2) having at least one concave surface (12a; 22a) confronting one of opposite surfaces of said photomagnetic recording medium (11; 21; 31; 41; 61);
(b) means (14; 24; 34-1, 34-2; 44-1, 44-2; 64-1, 64-2) for generating a magnetic field to be supplied to said photomagnetic recording medium (11; 21; 31; 41; 61) along said axis of easy magnetization; and
(c) a single light source disposed inwardly of said at least one concave surface of said reflector means
**said photomagnetic eraser being characterized by**
(d) at least one additional light source (13; 13a to 13d; 23; 23a to 23d; 33-1, 33-2; 43-1, 43-2; 63-1a to 63-1c; 63-2a to 63-2c) disposed inwardly of said at least one concave surface (12a; 22a) of said reflector means (12; 22; 32-1, 32-2; 42-1, 42-2; 62-1, 62-2) for applying light on said one surface of said photomagnetic recording medium (11; 21; 31; 41; 61) directly and/or via said reflector means (12; 22; 32-1, 32-2; 42-1, 42-2; 62-1, 62-2) for heating uniformly said magnetic layer; and
(e) an auxiliary heating means (50, 51, 52) other than a light source for preheating said entire photomagnetic recording medium (11; 21; 31; 41; 61).

2. A photomagnetic eraser according to claim 1, **characterized in that**
said photomagnetic recording medium is a double-face photomagnetic recording medium (31; 41; 61) having a pair of magnetic layers one on each side;
said reflector means (32-1, 32-2; 42-1, 42-2; 62-1, 62-2) comprises a pair of concave surfaces;
said plurality of light sources (33-1, 33-2; 43-1, 43-2; 63-1a to 63-1c, 63-2a to 63-2c) is disposed inwardly of said concave surfaces; and
said means for generating a magnetic field comprises a pair of means (34-1, 34-2; 44-1, 44-2; 64-1, 64-2) each for generating a magnetic field to be supplied to the respective magnetic layer along the corresponding axis of easy magnetization.

3. A photomagnetic eraser according to claim 2, **characterized in that**
said plurality of light sources is a pair of light sources (33-1, 33-2; 43-1, 43-2) each disposed inwardly of one of said pair of concave surfaces.

4. A photomagnetic eraser according to claim 3, **characterized in that**
one of said pair of light sources (33-1, 33-2; 43-1, 43-2) and one of said pair of means (34-1, 34-2; 44-1, 44-2) for generating a magnetic field which correspond to one of the opposite surfaces of said double-face magnetic recording medium (31; 41), are operable, depending on the selection of said magnetic layer on which the erasing of information is to be conducted, to generate light and a magnetic field, respectively.

5. A photomagnetic eraser according to claim 2, **characterized in that**
one set of said plurality of light sources (63-1a to 63-1c, 63-2a to 63-2c) and one of said pair of means (64-1, 64-2) for generating a magnetic field which correspond to one of the opposite surfaces of said double-face magnetic recording medium (61), are operable, depending on the selection of said magnetic layer on which the erasing of information is to be conducted, to generate light and a magnetic field, respectively.

6. A photomagnetic eraser according to any of the preceding claims 1 to 5, **characterized in that**
each of said plurality of light sources (13; 13a to 13d; 23; 23a to 23d; 33-1, 33-2; 43-1, 43-2; 63-1a to 63-1c, 63-2a to 63-2d) is a flash lamp for emitting a brief dazzling light.

7. A photomagnetic eraser according to any of the preceding claims 1 to 6, **characterized in that**
said plurality of light sources (13; 13a to 13d; 23; 23a to 23d; 33-1, 33-2; 43-1, 43-2; 63-1a to 63-1c, 63-2a to 63-2c) is disposed on an imaginary circle concentric with the spheric curvature of said at least one concave surface (12a; 22a) of said reflector means (12; 22; 32-1, 32-2; 42-1, 42-2; 62-1, 62-2).

8. A photomagnetic eraser according to any of the preceding claims 1 to 7, **characterized in that**
said plurality of light sources (13; 13a to 13d; 23; 23a to 23d; 33-1, 33-2; 43-1, 43-2; 63-1a to 63-1c, 63-2a to 63-2c) is spaced from said concave surface (12a; 22a) of said reflector means (12; 22; 32-1, 32-2; 42-1, 42-2; 62-1, 62-2) by different distances.

9. A photomagnetic eraser according to any of the preceding claims 1 to 8, **characterized in that**
said means (14; 24; 34-1, 34-2; 44-1, 44-2; 64-1, 64-2) for generating a magnetic field is an electromagnet.

10. A photomagnetic eraser according to any of the preceding claims 1 to 9, **characterized in that**
said means (14; 24; 34-1, 34-2; 44-1, 44-2; 64-1, 64-2) for generating a magnetic field is capable of generating a magnetic field in synchronism with the light emitting timing of said plurality of light sources (13; 13a to 13d; 23; 23a to 23d; 33-1, 33-2; 43-1, 43-2; 63-1a to 63-1c, 63-2a to 63-2c).

11. A photomagnetic eraser according to any of the preceding claims 1 to 10, **characterized in that**
said auxiliary heating means (50, 51, 52) comprises a housing (50), a glass window (51) being arranged directly opposite to said plurality of light sources (13; 13a to 13d; 23; 23a to 23d; 33-1, 33-2; 43-1, 43-2; 63-1a to 631c, 63-2a to 63-2c) and a heating means (52) for heating the interior of said housing (50), and
said photomagnetic recording medium (11; 21; 31; 41; 61) is arranged inside said auxiliary heating means (50, 51, 52).

## Patentansprüche

1. Photomagnetische Löschvorrichtung zum Löschen von Information, die auf einer Magnetschicht eines photomagnetischen Aufzeichnungsmediums (11; 21; 31; 41; 61) aufgezeichnet ist, wobei die Magnetschicht eine Achse der einfachen Magnetisierung senkrecht zu ihrer Oberfläche aufweist, mit:
(a) einer Reflektoreinrichtung (12; 22; 32-1, 32-2; 42-1, 42-2; 62-1, 62-2), die zumindest eine konkave Oberfläche (12a; 22a) gegenüber einer von gegenüberliegenden Oberflächen des photomagnetischen Aufzeichnungsmediums (11; 21; 31; 41; 61) aufweist;
(b) eine Einrichtung (14; 24; 34-1, 34-2; 44-1, 44-2; 64-1, 64-2) zum Erzeugen eines Magnetfelds, das dem photomagnetischen Aufzeichnungsmedium (11; 21; 31; 41; 61) entlang dessen Achse der einfachen Magnetisierung zugeführt wird; und
(c) eine einzelne Lichtquelle, die innerhalb der zumindest einen konkaven Oberfläche der Reflektoreinrichtung angeordnet ist,
gekennzeichnet durch
(d) zumindest eine zusätzliche Lichtquelle (13; 13a bis 13d; 23; 23a bis 23d; 33-1, 33-2; 43-1, 43-2; 63-1a bis 63-1c, 63-2a bis 63-2c), die innerhalb der zumindest einen konkaven Oberfläche (12a; 22a) der Reflektoreinrichtung (12; 22; 32-1, 32-2; 42-1, 42-2; 62-1, 62-2) angeordet ist und zum Zuführen von Licht auf die eine Oberfläche des photomagnetischen Aufzeichnungsmediums (11; 21; 31; 41; 61) direkt und/oder über die Reflektoreinrichtung (12; 22; 32-1, 32-2; 42-1, 42-2; 62-1, 62-2) zum gleichmäßigen Erhitzen der Magnetschicht dient; und
(e) eine Hilfs-Heizeinrichtung (50, 51, 52), die keine Lichtquelle ist, zum Vorheizen des gesamten photomagnetischen Aufzeichnungsmediums (11; 21; 31; 41; 61).

2. Photomagnetische Löschvorrichtung nach Anspruch 1, dadurch gekennzeichnet, daß
das photomagnetische Aufzeichnungsmedium ein doppelseitiges photomagnetisches Aufzeichnungsmedium (31; 41; 61) mit einem Paar von magnetischen Schichten auf jeweils einer Seite ist; die Reflektoreinrichtung (32-1, 32-2; 42-1, 42-2; 62-1, 62-2) ein Paar von konkaven Oberflächen aufweist;
die Vielzahl von Lichtquellen (33-1, 33-2; 43-1, 43-2; 63-1a bis 63-1c, 63-2a bis 63-2c) innerhalb der konkaven Oberflächen angeordnet sind; und
die Einrichtung zur Erzeugung eines magnetischen Felds ein Paar von Einrichtungen (34-1, 34-2; 44-1, 44-2; 64-1, 64-2) aufweist, die jeweils zum Erzeugen eines Magnetfelds dienen, das entlang der entsprechenden Achse der leichten Magnetisierung den entsprechenden Magnetschichten zugeführt wird.

3. Photomagnetische Löschvorrichtung nach Anspruch 2, dadurch gekennzeichnet, daß
die Vielzahl von Lichtquellen ein Paar von Lichtquellen (33-1, 33-2; 43-1, 43-2) ist, die jeweils innerhalb einer des Paars konkaver Oberflächen angeordnet sind.

4. Photomagnetische Löschvorrichtung nach Anspruch 3, dadurch gekennzeichnet, daß
eine von dem Paar von Lichtquellen (33-1, 33-2; 43-1, 43-2) und eine von dem Paar von Einrichtungen (34-1, 34-2; 44-1, 44-2) zum Erzeugen eines Magnetfelds, die einer der gegenüberliegenden Oberflächen des doppelseitigen magnetischen Aufzeichnungsmediums (31; 41) entsprechen, zur Erzeugung von Licht und eines magnetischen Felds betreibbar sind, in Abhängigkeit von der Wahl der magnetischen Schicht, bei der die Löschung von Information durchzuführen ist.

5. Photomagnetische Löschvorrichtung nach Anspruch 2, dadurch gekennzeichnet, daß
ein Satz der Vielzahl von Lichtquellen (63-1a bis 63-1c, 63-2a bis 63-2c) und eine aus dem Paar von Einrichtungen (64-1, 64-2) zum Erzeugen eines magnetischen Felds, die zu einer der gegenüberliegenden Oberflächen des doppelseitigen magnetischen Aufzeichnungsmediums (61) korrespondieren, zum Erzeugen von Licht und eines Magnetfelds betreibbar sind, in Abhängigkeit von der Wahl der Magnetschicht, bei der die Löschung von Information durchzuführen ist.

6. Photomagnetische Löschvorrichtung nach einem der vorstehenden Ansprüche 1-5, dadurch gekennzeichnet, daß
jede der Vielzahl von Lichtquellen (13; 13a bis 13d; 23; 23a bis 23d; 33-1, 33-2; 43-1, 43-2; 63-1a bis 63-1c, 63-2a bis 63-2d) eine Blitzlampe zum Abstrahlen eines kurzen, grellen Lichts ist.

7. Photomagnetische Löschvorrichtung nach einem der vorstehenden Ansprüche 1-6, dadurch gekennzeichnet, daß
die Vielzahl von Lichtquellen (13; 13a bis 13d; 23; 23a bis 23d; 33-1, 33-2; 43-1, 43-2; 63-1a bis 63-1c, 63-2a bis 63-2c) auf einem imaginären Kreis angeordnet ist, der zu der sphärischen Krümmung der zumindest einen konkaven Oberfläche (12a; 22a) der Reflektoreinrichtung (12; 22; 32-1, 32-2; 42-1, 42-2; 62-1, 62-2) konzentrisch ist.

8. Photomagnetische Löschvorrichtung nach einem der vorstehenden Ansprüche 1-7, dadurch gekennzeichnet, daß
die Vielzahl von Lichtquellen (13; 13a bis 13d; 23; 23a bis 23d; 33-1, 33-2; 43-1, 43-2; 63-1a bis 63-1c, 63-2a bis 63-2c) von der konkaven Oberfläche (12a; 22a) der Reflektoreinrichtung (12; 22; 32-1, 32-2; 42-1, 42-2; 62-1, 62-2) verschieden weit entfernt ist.

9. Photomagnetische Löschvorrichtung nach einem der vorstehenden Ansprüche 1-8, dadurch gekennzeichnet, daß
die Einrichtung (14; 24; 34-1, 34-2; 44-1, 44-2; 64-1, 64-2) zum Erzeugen eines Magnetfelds ein Elektromagnet ist.

10. Photomagnetische Löschvorrichtung nach einem der vorstehenden Anprüche 1-9, dadurch gekennzeichnet, daß
die Einrichtung (14; 24; 34-1, 34-2; 44-1, 44-2; 64-1, 64-2) zum Erzeugen eines Magnetfelds in der Lage ist, ein Magnetfeld synchron zu den Lichtabstrahlzeitpunkten der Vielzahl von Lichtquellen (13; 13a bis 13d; 23; 23a bis 23d; 33-1, 33-2; 43-1, 43-2; 63-1a bis 63-1c, 63-2a bis 63-2c) zu erzeugen.

11. Photomagnetische Löschvorrichtung nach einem der vorstehenden Ansprüche 1-10, dadurch gekennzeichnet, daß
die Hilfs-Heizeinrichtung (50, 51, 52) ein Gehäuse (50), ein Glasfenster (51), das direkt gegenüber der Vielzahl von Lichtquellen (13; 13a bis 13d; 23; 23a bis 23d; 33-1, 33-2; 43-1, 43-2; 63-1a bis 63-1c, 63-2a bis 63-2c) angeordnet ist, und eine Heizeinrichtung (52) zum Erhitzen des Inneren des Gehäuses (50) beinhaltet, und
daß photomagnetische Aufzeichnungsmedium (11; 21; 31; 41; 61) innerhalb der Hilfs-Heizeinrichtung (50, 51, 52) angeordnet ist.

## Revendications

1. Organe d'effacement photomagnétique destiné à effacer des informations enregistrées sur une couche magnétique d'un support d'enregistrement photomagnétique (11 ; 21 ; 31 ; 41 ; 61), la couche magnétique ayant un axe d'aimantation préférentielle qui est perpendiculaire à sa surface, l'organe d'effacement comprenant :
(a) un moyen réflecteur (12 ; 22 ; 32-1, 32-2 ; 42-1, 42-2 ; 62-1, 62-2) ayant au moins une surface concave (12a ; 22a) tournée vers une surface opposée du support d'enregistrement photomagnétique (11 ; 21 ; 31 ; 41 ; 61),
(b) un moyen (14 ; 24 ; 34-1, 34-2 ; 44-1, 44-2 ; 64-1, 64-2) destiné à créer un champ magnétique destiné à être appliqué au support d'enregistrement photomagnétique (11 ; 21 ; 31 ; 41 ; 61) le long de l'axe d'aimantation préférentielle, et
(c) une source lumineuse unique placée vers l'intérieur d'au moins une surface concave du moyen réflecteur,
l'organe d'effacement photomagnétique étant caractérisé par :
(d) au moins une source lumineuse supplémentaire (13 ; 13a à 13d ; 23 ; 23a à 23d ; 33-1, 33-2 ; 43-1, 43-2 ; 63-1a à 63-1c, 63-2a à 63-2c), disposée à l'intérieur de ladite surface concave au moins (12a ; 22a) du moyen réflecteur (12 ; 22 ; 32-1, 32-2 ; 42-1, 42-2 ; 62-1, 62-2), afin qu'elle applique de la lumière à la surface du support d'enregistrement photomagnétique (11 ; 21 ; 31 ; 41 ; 61) directement et/ou par l'intermédiaire du moyen réflecteur (12 ; 22 ; 32-1, 32-2 ; 42-1, 42-2 ; 62-1, 62-2) pour le chauffage uniforme de la couche magnétique, et
(e) un moyen auxiliaire de chauffage (50, 51, 52) autre qu'une source lumineuse et destiné à préchauffer la totalité du support d'enregistrement photomagnétique (11 ; 21 ; 31 ; 41 ; 61).

2. Organe d'effacement photomagnétique selon la revendication 1, caractérisé en ce que le support d'enregistrement photomagnétique est un support (31 ; 41 ; 61) à deux faces ayant deux couches magnétiques à raison d'une de chaque côté,
le moyen réflecteur (32-1, 32-2 ; 42-1, 42-2 ; 62-1, 62-2) comporte deux surfaces concaves,
les sources lumineuses (33-1, 33-2 ; 43-1, 43-2 ; 63-1a à 63-1c, 63-2a à 63-2c) sont disposées à l'intérieur par rapport aux surfaces concaves, et
le moyen générateur d'un champ magnétique comporte deux dispositifs (34-1, 34-2 ; 44-1, 44-2 ; 64-1, 64-2) destinés chacun à créer un champ magnétique destiné à être appliqué à la couche magnétique respective le long de l'axe correspondant d'aimantation préférentielle.

3. Organe d'effacement photomagnétique selon la revendication 2, caractérisé en ce que les sources lumineuses sont formées d'une paire de sources lumineuses (33-1, 33-2 ; 43-1, 43-2) disposées chacune vers l'intérieur de l'une des paires de surfaces concaves.

4. Organe d'effacement photomagnétique selon la revendication 3, caractérisé en ce que l'une des deux sources lumineuses (33-1, 33-2 ; 43-1, 43-2) et l'une des paires de moyens (34-1, 34-2 ; 44-1, 44-2) générateurs d'un champ magnétique correspondant à l'une des surface's opposées du support d'enregistrement magnétique à deux faces (31 ; 41) sont destinées, en fonction de la sélection de la couche magnétique sur laquelle l'effacement des informations doit être réalisé, à créer de la lumière et un champ magnétique respectivement.

5. Organe d'effacement photomagnétique selon la revendication 2, caractérisé en ce qu'un ensemble comprenant plusieurs sources lumineuses (63-1a à 63-1c, 63-2a à 63-2c) et l'un des deux moyens (64-1, 64-2) générateurs d'un champ magnétique correspondant à l'une des surfaces opposées du support (61) d'enregistrement magnétique à deux faces sont destinés, suivant la sélection de la couche magnétique sur laquelle l'effacement des informations doit être réalisé, à créer de la lumière et un champ magnétique respectivement.

6. Organe d'effacement photomagnétique selon l'une quelconque des revendications 1 à 5, caractérisé en ce que chacune des sources lumineuses (13 ; 13a à 13d ; 23 ; 23a à 23d ; 33-1, 33-2 ; 43-1, 43-2 ; 63-1a à 63-1c, 63-2a à 63-2c) est une lampe à éclairs destinée à émettre un court éclair aveuglant.

7. Organe d'effacement photomagnétique selon l'une quelconque des revendications 1 à 6, caractérisé en ce que les sources lumineuses (13 ; 13a à 13d ; 23 ; 23a à 23d ; 33-1, 33-2 ; 43-1, 43-2 ; 63-1a à 63-1c, 63-2a à 63-2c) sont disposées sur un cercle imaginaire concentrique à la courbure sphérique de ladite surface concave au moins (12a ; 22a) du moyen réflecteur (12 ; 22 ; 32-1, 32-2 ; 42-1, 42-2 ; 62-1, 62-2).

8. Organe d'effacement photomagnétique selon l'une quelconque des revendications précédentes 1 à 7, caractérisé en ce que les sources lumineuses (13 ; 13a à 13d ; 23 ; 23a à 23d ; 33-1, 33-2 ; 43-1, 43-2 ; 63-1a à 63-1c, 63-2a à 63-2c) sont placées à des distances différentes de la surface concave (12a ; 22a) du moyen réflecteur (12 ; 22 ; 32-1, 32-2 ; 42-1, 42-2 ; 62-1, 62-2).

9. Organe d'effacement photomagnétique selon l'une quelconque des revendications précédentes 1 à 8, caractérisé en ce que le moyen (14 ; 24 ; 34-1, 34-2 ; 44-1, 44-2 ; 64-1, 64-2) générateur d'un champ magnétique est un électro-aimant.

10. Organe d'effacement photomagnétique selon l'une quelconque des revendications précédentes 1 à 9, caractérisé en ce que le moyen (14 ; 24 ; 34-1, 34-2 ; 44-1, 44-2 ; 64-1, 64-2) générateur d'un champ magnétique peut créer un champ magnétique en synchronisme avec l'émission lumineuse par les sources lumineuses (13 ; 13a à 13d ; 23 ; 23a à 23d ; 33-1, 33-2 ; 43-1, 43-2 ; 63-1a à 63-1c, 63-2a à 63-2c).

11. Organe d'effacement photomagnétique selon l'une quelconque des revendications précédentes 1 à 10, caractérisé en ce que que le moyen auxiliaire de chauffage (50, 51, 52) comprend un boîtier (50), une fenêtre (51) de verre étant placée directement en face des sources lumineuses (13 ; 13a à 13d ; 23 ; 23a à 23d ; 33-1, 33-2 ; 43-1, 43-2 ; 63-1a à 63-1c, 63-2a à 63-2c), et un moyen de chauffage (52) destiné à chauffer l'intérieur du boîtier (50), et le support d'enregistrement photomagnétique (11 ;21 ;31 ; 41 ; 61) est placé à l'intérieur du dispositif auxiliaire de chauffage (50, 51, 52).
